# FASCICULE DE BREVET EUROPEEN

(11) **EP 4 176 196 B1**
(45) Date de publication et mention de la délivrance du brevet: **07.08.2024**
(21) Numéro de dépôt: 21739122.6
(22) Date de dépôt: 02.07.2021
(51) Int. Cl.: F16L 55/16

(54) **DISPOSITIF D'OBTURATION POUR COLMATER UNE FUITE DANS LA PAROI D'UNE CANALISATION OU D'UN RÉSERVOIR COMPRENANT UNE PARTIE POUR PERCER ET UNE PARTIE POUR TARAUDER ET PROCÉDÉ D'OBTURATION**
DICHTUNGSVORRICHTUNG ZUM ABDICHTEN EINES LECKS IN DER WAND EINES ROHRS ODER EINES TANKS MIT EINEM TEIL ZUM BOHREN UND TEIL ZUM ANBOHREN UND DICHTUNGSVERFAHREN
SEALING DEVICE FOR PLUGGING A LEAK IN THE WALL OF A PIPE OR OF A TANK COMPRISING A PART FOR DRILLING AND A PART FOR TAPPING AND SEALING METHOD

(30) Priorité: 03.07.2020 FR 2007060
(43) Date de publication de la demande: 10.05.2023
(73) Titulaire: 3X Engineering, 98000 Monaco (MC)
(72) Inventeur: BOULET D'AURIA, Stanislas, 06230 Villefranche-sur-Mer (FR); SLIMANI, Hacen, 06000 Nice (FR)
(74) Mandataire: Bonneau, Florence
(86) Numéro de dépôt international: PCT/EP2021/068339
(87) Numéro de publication internationale: WO 2022/003160

(56) Documents cités:
- EP-A1- 2 014 931
- EP-A2- 0 951 626
- GB-A- 2 573 858
- JP-A- H09 210 285
- JP-A- H09 210 285
- US-A- 1 768 456

## Description

### Domaine technique

La présente invention concerne les dispositifs de réparation des pipelines, canalisation et conduites destinés à transporter des fluides ou du gaz sous pression et concerne en particulier un dispositif d'obturation pour colmater une fuite dans la paroi d'une canalisation ou d'un réservoir, comprenant une partie pour percer et une partie pour tarauder et procédé d'obturation.

### Etat de la technique

Les pipelines ou canalisations qui transportent du gaz ou du liquide sous pression sur de longues distances sont soumis à des dégradations telles que la corrosion intérieure et extérieure ou à des chocs ou à des sabotages. Il arrive souvent que la canalisation soit endommagée au point de provoquer une fuite de son contenu par la formation d'une fissure ou d'un trou. Des solutions de réparation se sont développées afin de stopper ces fuites locales. Par exemple, par soudage d'une plaque d'acier à l'endroit du trou. Cependant, cette solution présente les inconvénients d'utiliser un matériel lourd et d'être longue à mettre en oeuvre. D'autre part, son coût en matériau et en main d'oeuvre est élevé et parfois sa mise en oeuvre est impossible dans certains endroits fermés. Une autre solution consiste à appliquer sur le trou une plaque d'acier enrubannée par du composite. La mise en oeuvre de cette solution est délicate et sa fiabilité est incertaine car elle dépend de la température ambiante et des matériaux ce qui la rend très difficile à réaliser sur une canalisation immergée.

La solution de colmater par application d'un mastic est utilisable sur des canalisations sous faible pression et est temporaire.

Enfin, une solution consiste à mettre un bouchon fileté. Cependant, cela nécessite d'avoir un trou parfaitement circulaire et d'effectuer un taraudage aligné dans l'axe du perçage. L'étape de taraudage généralement effectuée après l'étape de perçage nécessite d'être parfaitement aligné et centré sur l'axe du perçage. De plus, le bouchon doit être introduit délicatement ensuite pour ne pas endommager le filet en créant un filetage croisé qui entraînerait un chemin de fuite le long du filetage, ce qui représente une difficulté supplémentaire dans le cas d'une canalisation sous pression et immergée.

Un bouchon pour canalisation de l'art antérieur décrit dans le document EP0951626 comprend une partie auto-taraudeuse qui permet, lors de l'installation du bouchon dans le trou conique dans lequel on l'insère, de créer un filetage sur la paroi interne du trou. Le bouchon comprend à son extrémité des bagues d'étanchéité dont le diamètre est plus petit que le diamètre initial décroissant du trou conique dans lequel le bouchon est inséré. Les bagues d'étanchéité entrent en contact avec la paroi interne du trou lorsque la tête du bouchon approche de sa position en appui contre la canalisation. Un tel bouchon nécessite de percer au préalable un trou conique aux dimensions du bouchon.

Le document JPH09210285A décrit un dispositif de fermeture de trou de fuite comprenant une vis taraudeuse adapté pour se visser dans le trou de fuite lorsqu'on tape dessus avec un marteau et muni d'un joint cylindrique d'étanchéité. Cette solution présente l'inconvénient de nécessiter de gros moyens dans le cas d'une canalisation sous pression et immergée.

### Exposé de l'invention

C'est pourquoi, le but de l'invention est de pallier les inconvénients précités en fournissant un dispositif d'obturation comprenant un bouchon, un taraud et un foret.

Un autre but de l'invention est de fournir un procédé d'obturation d'une fuite dans une paroi d'une canalisation ou d'un réservoir réalisé en une seule étape.

L'objet de l'invention est donc un dispositif d'obturation d'axe longitudinal (Z, Z') pour colmater une fuite dans la paroi d'une canalisation ou d'un réservoir comprenant en outre un moyen d'entrainement à une extrémité, un bouchon et un taraud, le dispositif comprenant à son autre extrémité une tête de perçage adaptée pour percer un trou cylindrique dans l'épaisseur de la paroi de la canalisation à l'endroit de la fuite, le taraud créant un taraudage à l'intérieur des parois lisses du trou cylindrique. Selon les caractéristiques principales, le bouchon comprend un filetage et un chanfrein de fin de filetage sur lequel le filetage se finit, la fin du filet se prolongeant sur une gorge de dégagement et un chanfrein supérieur lisse adapté pour déformer le filet de fin de taraudage, ledit trou étant destiné à être bouché par le bouchon de façon étanche.

De façon avantageuse, le dispositif selon l'invention est placé dans la paroi d'une canalisation à l'endroit de l'ouverture responsable d'une fuite, en une seule opération qui inclut le perçage dans l'épaisseur de la paroi de la canalisation, le taraudage et la pose d'un bouchon fileté dans le trou de perçage. D'autre part, le dispositif comprend des moyens pour désassembler la partie outil de perçage et de taraudage de la partie bouchon et moyen d'entrainement. En effet, cette partie devient inutile dès que la partie bouchon est mise en place et peut même contribuer à gêner le passage d'instruments à l'intérieur de la canalisation. En effet, de façon à vérifier le bon fonctionnement et l'état de certaine canalisation de type conduite de pétrole ou de gaz, on inspecte l'intérieur de la canalisation au moyen d'un outil appelé racleur instrumenté qui se déplace à l'intérieur de la canalisation. La possibilité de désassembler la partie outil de perçage et de taraudage de la partie bouchon et moyen d'entrainement est donc particulièrement avantageuse pour ce type de canalisation.

Selon un deuxième objet, l'invention vise un procédé d'obturation d'une fuite sur la paroi d'une canalisation ou d'un réservoir réalisé en une seule étape, comprenant les cinq sous-étapes suivantes :
- centrer le dispositif d'obturation sur l'endroit de la fuite,
- entraîner en rotation le dispositif d'obturation autour de son axe longitudinal (Z-Z') grâce à un outil d'entrainement en rotation,
- percer la paroi de la canalisation grâce à une tête de perçage située à l'extrémité du dispositif d'obturation et réaliser un trou cylindrique,
- tarauder la paroi interne lisse du trou cylindrique grâce au taraud du dispositif d'obturation,
- visser le bouchon situé à l'autre extrémité du dispositif d'obturation dans le trou taraudé jusqu'à ce que le chanfrein supérieur du dispositif d'obturation pénètre entièrement dans le trou cylindrique de façon à exercer une forte pression sur le taraudage et écrouir la fin du filet formant le taraudage.

### Brève description des figures

Les buts, objets et caractéristiques de l'invention apparaîtront plus clairement à la lecture de la description qui suit faite en référence aux dessins dans lesquels :
[Fig. 1] représente une vue schématique du dispositif selon l'invention selon un premier mode de réalisation,
[Fig. 2] représente une vue schématique du dispositif selon l'invention selon un second mode de réalisation,
[Fig. 3] représente le dispositif selon l'invention du premier mode de réalisation selon une variante,
[Fig. 4] représente le dispositif selon l'invention du second mode de réalisation selon une variante,
[Fig. 5] représente le dispositif selon l'invention du premier mode de réalisation avec un premier moyen pour désassembler la partie bouchon,
[Fig. 6] représente le dispositif selon l'invention du premier mode de réalisation avec un second moyen pour désassembler la partie bouchon,
[Fig. 7] représente le dispositif selon l'invention du premier mode de réalisation avec un troisième moyen pour désassembler la partie bouchon,
[Fig. 8a] représente la première sous-étape du procédé d'obturation selon l'invention,
[Fig. 8b] représente les deuxième et troisième sous-étapes du procédé d'obturation selon l'invention,
[Fig. 8c] représente la quatrième sous-étape du procédé d'obturation selon l'invention,
[Fig. 8d] représente la cinquième sous-étape du procédé d'obturation selon l'invention,
[Fig. 9] représente une variante de réalisation du procédé d'obturation selon l'invention,
[Fig. 10] représente une autre variante de réalisation du procédé d'obturation selon l'invention.

### Description détaillée de l'invention

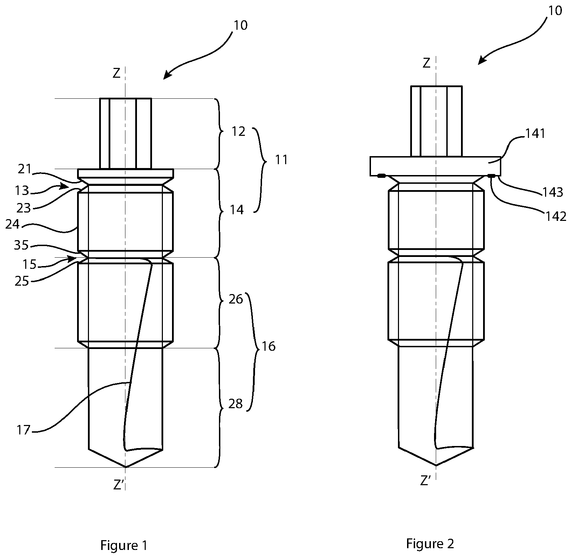

En référence aux figures et en particulier à la figure 1, le dispositif d'obturation 10 selon l'invention se présente sous forme d'une tige d'axe longitudinal (Z-Z') qui comprend à une de ses extrémités une première partie 16 auto-perceuse et auto-taraudeuse et à l'autre extrémité une seconde partie 11 comprenant un bouchon 14 pour obturer de façon étanche un trou cylindrique dans la paroi dans laquelle le dispositif sera placé et un moyen d'entrainement 12.

La partie auto-perceuse et auto-taraudeuse 16 comprend un taraud 26 ou filetage auto-taraudant et une tête de perçage 28 sous la forme d'un foret. La tête de perçage 28 comprend au moins une goujure 17 adaptée pour évacuer les copeaux lors du perçage. La goujure 17 se prolonge sur la partie du taraud 26. La tête de perçage a un diamètre suffisant pour que le trou cylindrique créé remplace et fasse disparaître l'ouverture à l'origine de la fuite. Ce diamètre est généralement compris entre 7 mm et 15 mm. La longueur de la tête de perçage est supérieure à l'épaisseur de la paroi à percer pour évacuer le plus possible de copeaux.

Le taraud 26 a un diamètre au fond du filet qui est égal au diamètre de la tête de perçage 28. La hauteur du filet du taraud 26 est comprise entre 10 mm et 20 mm et est de préférence égale à 15 mm. Le pas du filet du taraud 26 est généralement compris entre 1 mm et 2 mm et de préférence égal à 1,25 mm pour induire peu d'effort de couple pendant l'étape de taraudage. Du côté opposé à la tête de perçage 28, et selon un mode de réalisation, le taraud 26 se termine par un chanfrein de fin de filetage 25 faisant une pente d'un angle de l'ordre de 30 degrés avec un plan perpendiculaire à l'axe longitudinal (Z-Z'). Le chanfrein 25 crée un rétrécissement annulaire 15 de diamètre au plus égal au diamètre de la tête de perçage donc également au plus égal au diamètre au fond du filet du taraud 26.

Le rétrécissement annulaire 15 se prolonge sur le bouchon 14 qui comprend un filetage 24 dont le diamètre nominal est égal au diamètre nominal du taraud 26, dont la hauteur de filet est égale à la hauteur du filet du taraud et dont le pas du filet est égal au pas du filet du taraud 26. Le filetage 14 commence par un chanfrein 35 de début de filetage faisant une pente d'un angle de l'ordre de 30 degrés avec un plan perpendiculaire à l'axe longitudinal (Z-Z'). Les deux chanfreins 25 et 35 font un angle de l'ordre de 60 degrés entre eux, le rétrécissement annulaire 15 étant situé à la jonction des deux chanfreins donc entre la première et la deuxième partie.

Même lorsque le filetage 24 du bouchon 14 et le taraud 26 sont séparés par le rétrécissement annulaire 15, la forme hélicoïdale de leur filet respectif est dans la continuité l'une de l'autre. Plus précisément, le filetage 24 est une prolongation du taraud 26 de sorte que l'ensemble des deux ne forme qu'une seule hélicoïde interrompue par le rétrécissement annulaire 15. La fin du filet qui constitue le filetage 24 du bouchon 14 se prolonge sur une gorge de dégagement 13 qui comprend un chanfrein de fin de filetage 23 sur lequel, comme son nom l'indique, le filetage 24 se finit et un chanfrein supérieur 21. Le chanfrein de fin de filetage 23 fait un angle compris entre 30 et 50 degrés avec un plan perpendiculaire à l'axe longitudinal (Z-Z'). Le chanfrein supérieur 21 fait également un angle compris entre 30 et 50 degrés avec un plan perpendiculaire à l'axe longitudinal (Z-Z'). Le chanfrein de fin de filetage 23 fait un angle compris entre 60 et 100 degrés avec le chanfrein supérieur 21. Les deux chanfreins 23 et 21 délimitent la gorge de dégagement 13 dans lequel une pâte d'étanchéité, une bague, un joint ou tout autre moyen d'étanchéité peut être logé. D'autre part, la paroi du chanfrein supérieur 21 est lisse de façon à pouvoir écraser et écrouir le filet de fin de taraudage réalisé par le taraud 26 de manière à le déformer. Ainsi, la matière écrasée du filet de fin de taraudage a tendance à se déplacer dans le creux du filet et réalise une jonction étanche lorsque le bouchon 14 est mis en place dans le trou cylindrique créé par le taraud 26. L'effet d'écrasement et de déplacement de matière est réalisé également dans la direction des parois du trou cylindrique grâce à l'angle de la paroi du chanfrein. Par conséquent, le dispositif comprend un chanfrein déformant le filet de fin de taraudage réalisé par le taraud 26 lors de la mise en place du dispositif.Le moyen d'entrainement 12 sert à coopérer avec un outil pour entraîner le dispositif selon l'invention en rotation autour de son axe longitudinal (Z-Z'). Le moyen d'entrainement 12 peut être une queue de section hexagonale ou bien une empreinte creuse de forme hexagonale de type embout à six pans creux. Tout autre type de moyen d'entrainement peut être utilisé sans sortir du cadre de l'invention.

Selon un second mode de réalisation illustré sur la figure 2, le bouchon 14 comprend une tête de bouchon 141 située entre le chanfrein supérieur 21 et le moyen d'entrainement 12. La tête de bouchon 141 a un diamètre supérieur au diamètre nominal du filetage 24 et comprend un épaulement périphérique 143 sur lequel un joint annulaire 142 est monté. L'épaulement périphérique 143 est destiné à venir en appui contre la paroi de la canalisation ou du réservoir lorsque le dispositif selon l'invention est mis en place, ainsi le joint annulaire 142 sert de moyen d'étanchéité supplémentaire, en plus du filetage du bouchon. Notons que, lorsque le diamètre de la canalisation est de l'ordre de 100 fois supérieur au diamètre du filetage 24 du bouchon 14, la totalité du joint annulaire est en appui sur la paroi lorsque le dispositif d'obturation est monté serré dans son logement.

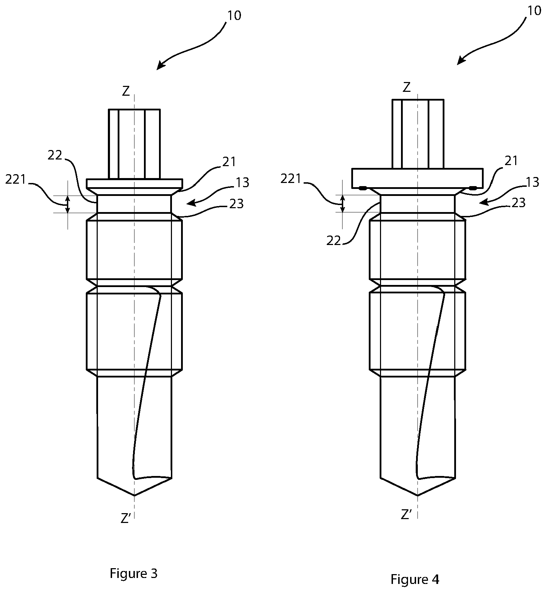

Une variante d'exécution du dispositif selon l'invention selon les premier et second modes de réalisation est illustrée sur les figures 3 et 4. Selon cette variante, la gorge de dégagement 13 comprend une partie cylindrique 22 dont la longueur est représentée par la double flèche 221 sur les figures. Le diamètre de la partie cylindrique 22 est égal au diamètre de fond de filet du filetage 24 du bouchon 14. La configuration dans laquelle la longueur du cylindre est nulle, correspond aux modes de réalisation décrit précédemment en référence aux figures 1 et 2. Selon la variante de réalisation la longueur 221 de la partie cylindrique 22 est comprise de préférence entre 1 et 5 mm.

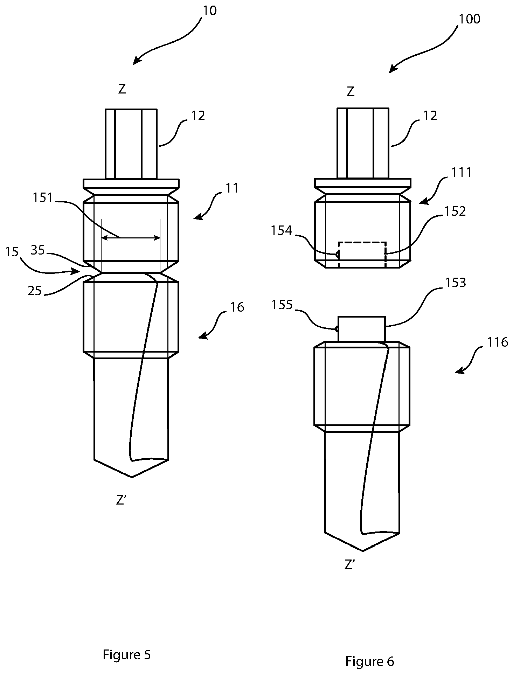

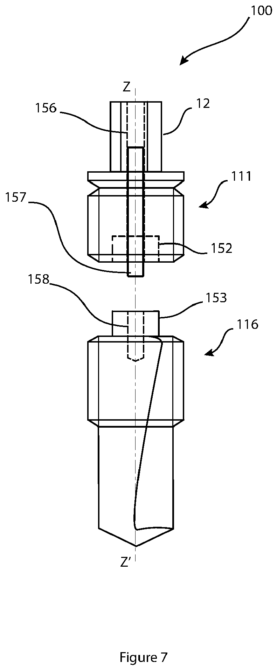

Les figures 5, 6 et 7, illustrent un dispositif munis de moyens pour désassembler les deux parties du dispositif une fois celui-ci mis en place, soit en partant d'un dispositif d'obturation fait d'un seul morceau comme celui illustré en figure 5 soit en partant d'un dispositif d'obturation fabriqué à partir de l'assemblage réversible des deux parties à l'origine séparées l'une de l'autre comme sur les dispositifs d'obturation 100 illustrés sur les figures 6 et 7. La figure 5 décrit un moyen pour désassembler la première partie de la seconde partie d'un dispositif d'obturation 10 mis en oeuvre lorsque la seconde partie est mis en place dans la paroi de la canalisation. Le rétrécissement annulaire 15 étant située à la jonction des deux parties et à la jonction des deux chanfreins 25 et 35, c'est au fond de cette gorge que se situe le plan de séparation des deux parties, situé dans un plan perpendiculaire à l'axe longitudinale (Z-Z') du dispositif d'obturation.

Selon la figure 5, le rétrécissement annulaire 15 a un diamètre minimum inférieur au diamètre de la tête de perçage et de préférence ce diamètre est compris entre 75% et 85% du diamètre de la tête de perçage. Selon ces dimensions, le rétrécissement annulaire 15 du dispositif d'obturation est une amorce de rupture. Le rétrécissement annulaire 15 de diamètre minimum représenté par la double flèche 151 correspondant à cette valeur est donc un moyen pour désassembler les deux parties situées de part et d'autre du rétrécissement annulaire 15, qui en se sectionnant permet à la première partie ou partie auto-perceuse et auto-taraudeuse 16 de se séparer de la seconde partie constituée du bouchon 14 et du moyen d'entrainement 12.

Les figures 6 et 7 illustrent un dispositif d'obturation 100 selon l'invention constitué de deux parties 116 et 111 équivalentes aux parties 16 et 11 du dispositif d'obturation 10 décrit précédemment mais dans lequel les parties sont à l'origine séparées l'une de l'autre et peuvent s'assembler et se désassembler. Le dispositif d'obturation 100 comprend donc des moyens pour assembler et désassembler les deux parties. La première partie 116 comprenant la partie auto-perceuse et auto-taraudeuse 16 et la seconde partie 111 comprenant le bouchon 14 et les moyens d'entrainement 12. La première partie s'assemble à la seconde partie grâce à un assemblage de pièces encastrées les unes dans les autres pour former le dispositif d'obturation 100 sous la forme d'une tige d'un seul tenant avant sa mise en place dans la paroi de la canalisation.

Selon la figure 6, la première partie 116 comprend une pièce 153 de section carrée située sur le plan de jonction des deux parties. La pièce 153 comporte sur une de ses faces une bille 155. La seconde partie 111 comprend un creux 152 qui s'étend dans l'épaisseur du bouchon à partir du plan de jonction des deux parties, le creux 152 ayant une section carrée et une forme correspond à la forme de la pièce 153. La pièce 153 et le creux 152 ont comme axe de symétrie l'axe longitudinal (Z-Z') et sont orientés l'un par rapport à l'autre de façon à ce que lorsque la pièce 153 est insérée dans le creux 152, les deux parties 116 et 111 sont alignées de façon à former un des dispositifs selon l'invention tel que décrit précédemment et représenté sur les figures 1 à 5. Lorsque le bouchon 14 est entraîné en rotation grâce au moyen d'entrainement 12, il entraine en rotation la partie auto-perceuse et auto-taraudeuse 116 grâce à l'encastrement de la pièce 153 dans le creux 152. Pendant la mise en place du dispositif d'obturation, les deux parties sont maintenues l'une contre l'autre par la pression exercée par l'outil sur la canalisation.

Le creux 152 comporte également sur une de ses faces un creux sphérique 154 correspondant au diamètre de la bille 155 et destiné à loger en partie la bille pour bloquer la pièce carrée 153 dans le creux 152 de façon réversible. La bille 155 et le creux sphérique 154 font partie des moyens pour assembler et désassembler les deux parties du dispositif d'obturation. Le dispositif selon l'invention peut ainsi être manipulé sans que les deux parties se désassemblent de façon intempestive. La première partie 116 est désassemblée de la seconde partie 111 par un effort de traction dans la direction (Z-Z') ou par un effort de poussée dans une direction perpendiculaire à l'axe (Z-Z') suffisant pour permettre à la bille 155 de sortir de son logement 154. Cet effort de poussée peut-être obtenu par le passage du racleur instrumenté qui en arrivant sur le dispositif d'obturation exerce une pression dessus suffisante pour désassembler la partie outil de perçage et de taraudage 116.

La figure 7 illustre le dispositif selon l'invention dans lequel la partie auto-perceuse et auto-taraudeuse 116 est assemblée à la seconde partie 111 constituée du bouchon 14 et du moyen d'entrainement 12 grâce à un assemblage de pièces encastrées les unes dans les autres. Comme pour le deuxième moyen illustré sur la figure 6, la première partie 116 comprend une pièce 153 de section carrée et la seconde partie 111 comprend dans l'épaisseur du bouchon un creux 152 de section carrée dont la forme correspond à la forme de la pièce 153. La pièce 153 et le creux 152 ont comme axe de symétrie l'axe longitudinal (Z-Z') de façon à ce que lorsque la pièce 153 est insérée dans le creux 152, les deux parties 116 et 111 sont alignées de façon à former un des dispositifs selon l'invention tel que représenté sur les figures 1 à 5.

D'autre part, le dispositif d'obturation 100, comprend un taraudage 158 situé dans la première partie 116 et un taraudage débouchant 156 situé dans la seconde partie 111, les deux taraudages étant alignés et centrés sur l'axe longitudinal (Z-Z') ont un diamètre et des filets de caractéristiques identiques. Le dispositif comprenant également une tige filetée 157 adaptée pour les taraudages 156 et 158 et vissée à l'intérieur. La tige filetée traverse le moyen d'entrainement 12 et le bouchon 14 jusqu'à la partie auto-perceuse et auto-taraudeuse 16 qu'elle maintient serrée contre le bouchon 14.

La première partie 116 est désassemblée de la seconde partie 111 par un dévissage de la tige filetée 157 accessible au milieu du moyen d'entrainement 12. En dévissant la tige filetée 157 elle sort petit à petit du taraudage 158. La seconde partie 116 tombe alors par gravité ou bien comme pour le mode de réalisation décrit selon la figure 6, la première partie 116 est désassemblée de la seconde partie 111 par un effort de poussée dans une direction perpendiculaire à l'axe (Z-Z'), effort qui peut être obtenu par le passage du racleur instrumenté.

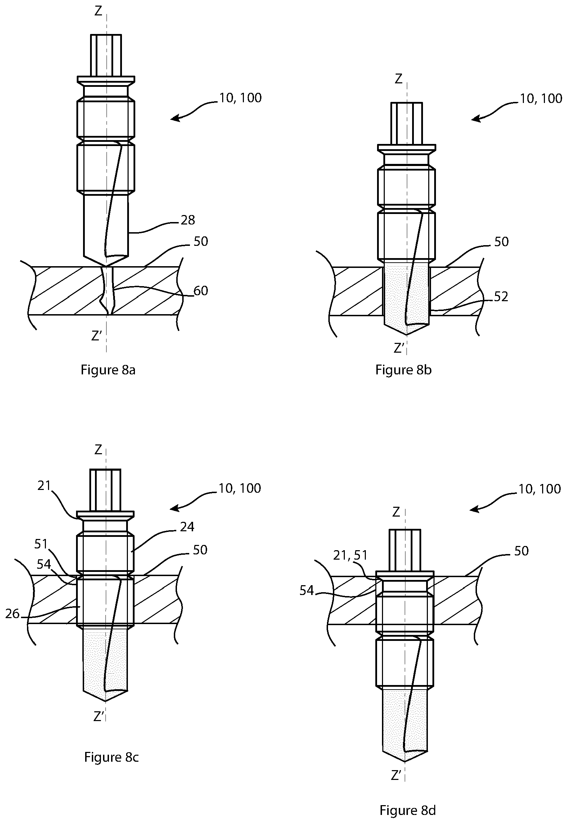

La présente invention se rapporte également à un procédé d'obturation de fuite dans une canalisation ou un réservoir en une seule opération ou étape dont les différentes sous-étapes sont illustrées sur les figures 8a, 8b, 8c et 8d. Ce procédé consiste à centrer le dispositif d'obturation 10 ou 100 selon l'invention à l'endroit d'une fuite 60 sur la paroi 50 d'une canalisation ou d'un réservoir, de percer la paroi 50 de part en part sur la partie à l'origine de la fuite grâce à un outil d'entraînement qui entraine en rotation le dispositif d'obturation. L'opérateur aura pris soin de choisir l'accessoire d'outillage adapté à l'outil d'entrainement et au moyen d'entrainement 12. La paroi 50 est percée grâce à la tête de perçage 28 et un trou cylindrique 52 est obtenu à la place de la fuite 60. Tandis que l'outil d'entrainement en rotation du dispositif selon l'invention est maintenu en place, le taraud 26 créé un taraudage 54 à l'intérieur des parois lisses du trou cylindrique 52.

Le dispositif d'obturation 10 ou 100 est entraîné en rotation par l'outil jusqu'à ce que le bouchon 14 soit mis en place dans le trou 52 de façon étanche. Pour cela le filetage 24 du bouchon 14 s'engage dans le taraudage 54 jusqu'à ce que le chanfrein supérieur 21 entre en contact avec le filet 51 de fin de taraudage 54. Le chanfrein supérieur 21 est la dernière partie du bouchon 14 qui s'engage dans le trou cylindrique 52.

La paroi du chanfrein supérieur 21 étant lisse, elle écrase et écrouit le filet 51 de fin de taraudage de manière à le déformer. La matière écrasée du filet a tendance à se déplacer dans le creux du filet et réalise une jonction étanche lorsque le bouchon 14 est mis en place dans le trou 52. L'effet d'écrasement et de déplacement de matière est réalisé également dans la direction des parois du trou cylindrique grâce à l'angle de la paroi du chanfrein compris entre 30 et 50 degrés par rapport à un plan perpendiculaire à l'axe longitudinal (Z-Z').

Le procédé d'obturation de fuite 60 sur une paroi 50 de canalisation ou de réservoir réalisé en une seule étape comprend les sous-étapes suivantes :
- centrer le dispositif d'obturation 10 ou 100 sur l'endroit de la fuite 60,
- entraîner en rotation le dispositif d'obturation 10 ou 100 autour de son axe longitudinal (Z-Z') grâce à un outil d'entrainement en rotation,
- percer la paroi 50 de la canalisation grâce à la tête de perçage 28 située à l'extrémité du dispositif d'obturation 10 ou 100 et réaliser un trou cylindrique 52,
- tarauder pour former un taraudage 54 sur la paroi interne lisse du trou cylindrique 52 grâce au taraud 26 du dispositif d'obturation 10 ou 100,
- visser le bouchon 14 situé à l'autre extrémité du dispositif d'obturation 10 ou 100 dans le trou taraudé jusqu'à ce que le chanfrein supérieur 21 du dispositif d'obturation 10 ou 100 pénètre entièrement dans le trou cylindrique de façon à exercer une forte pression sur le taraudage et écrouir la fin du filet 51 formant le taraudage 54.

Préalablement à ces sous-étapes, on peut remplir la gorge de dégagement 13 d'une pâte d'étanchéité ou bien d'un joint ou d'une bague d'étanchéité ou bien de tout autre moyen. Une fois le dispositif d'obturation 10 ou 100 mis en place, la pâte d'étanchéité ou tout autre moyen est emprisonné entre le taraudage 54 et la gorge de dégagement 13 du dispositif d'obturation 10 ou 100.

Une fois le dispositif d'obturation 10 ou 100 mis en place, les filets du filetage 24 du bouchon 14 et ceux du taraudage 54 sont en contact intime l'un contre l'autre et assurent également l'étanchéité. Cependant, la dernière sous-étape est importante pour garantir une parfaite étanchéité. Lorsque le filet de fin 51 du taraudage 54 est écrasé, il subit une déformation plastique qui est le résultat d'un écrouissage sous la pression exercée par le métal du chanfrein supérieur 21. Le métal déformé devenu plus dur et non élastique permet de rendre le bouchon 14 parfaitement étanche. Après cette étape, le chanfrein supérieur 21 a pénétré entièrement dans le trou cylindrique 52.

Le taraud doit avoir fini de tarauder le trou avant que le filetage du bouchon commence à s'engager dans le taraudage 54 du trou 52 pour éviter le décalage des filets qui pourraient nuire à la mise en place du bouchon. En effet, lorsque le taraud a fini de tarauder, tous les copeaux et les résidus de parois enlevés et accumulés ont été évacués, ce qui est indispensable pour éviter que le filetage 24 du bouchon s'engage dans le taraudage 54 sans décalage. Donc la longueur du taraud 26 doit être au moins égale à l'épaisseur de la paroi 50. La longueur du bouchon est également au moins égale à l'épaisseur de la paroi. De préférence le bouchon et le taraud ont la même longueur. La longueur du bouchon 14 se comprend comme étant la longueur du filetage 24 auquel on ajoute la longueur de la partie cylindrique 22 de la gorge de dégagement 13 et la hauteur des chanfreins 21 et 23 sont compris. Les dimensions du dispositif d'obturation 10 ou 100 sont adaptées pour chaque épaisseur de paroi 50.

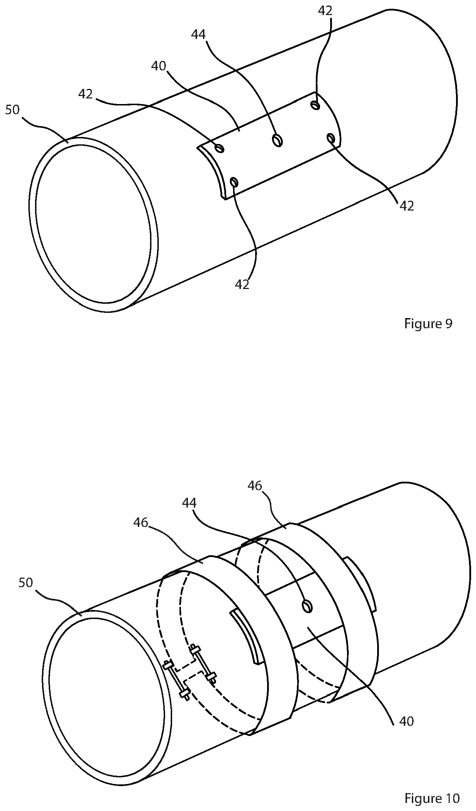

Selon un second procédé d'obturation, le dispositif d'obturation 10 selon l'invention est associé et centré à une plaque 40 qui vient épouser la courbure de la paroi 50 de la canalisation ou du réservoir comme on peut le voir illustré sur les figures 9 et 10. La plaque métallique 40 est positionnée sur la paroi 50 de façon à ce que l'ouverture 60 à l'origine de la fuite apparaisse dans un orifice 44 prévu dans la plaque 40. Les vis 42 fixant la plaque pourront être débouchantes au travers de la paroi si la zone de vissage est saine et pourront être non débouchantes au travers de la paroi si la zone de vissage est endommagée. Dans le cas de vis débouchantes, un moyen pour rendre étanche les vis sera prévu. La plaque 40 peut également être fixée sur la paroi à l'aide d'au moins une sangle 46 ou bien par collage.

La plaque 40 permet de renforcer la paroi 50 lorsque celle-ci est altérée autour de l'ouverture 60 à l'origine de la fuite. Le diamètre de l'orifice 44 prévu de préférence au centre de la plaque 40 est supérieur au plus grand diamètre du dispositif d'obturation de façon à former un passage pour le dispositif d'obturation suffisamment grand pour que l'opérateur ne soit pas gêné par la plaque lors de la mise en place du dispositif d'obturation dans l'orifice 44. Les matériaux qui composent le dispositif d'obturation et la plaque 40 peuvent être en acier, en composite métallique ou plastique.

## Revendications

1. Dispositif d'obturation (10, 100) d'axe longitudinal (Z, Z') pour colmater une fuite (60) dans la paroi (50) d'une canalisation ou d'un réservoir comprenant en outre un moyen d'entrainement (12) à une extrémité, un bouchon (14) et un taraud (26) , le dispositif comprenant à son autre extrémité une tête de perçage (28) adaptée pour percer un trou cylindrique (52) dans l'épaisseur de la paroi (50) à l'endroit de la fuite (60), ledit taraud (26) créant un taraudage (54) à l'intérieur des parois lisses du trou cylindrique (52),
**caractérisé en ce que** le ledit bouchon comprend un filetage (24) et un chanfrein de fin de filetage (23) sur lequel le filetage (24) se finit, la fin du filet se prolongeant sur une gorge de dégagement (13) et un chanfrein supérieur (21) lisse adapté pour déformer le filet (51) de fin de taraudage (54), ledit trou (52) étant destiné à être bouché par le bouchon (14) de façon étanche.

2. Dispositif d'obturation (10, 100) selon la revendication 1 comprenant deux parties, la première partie étant constituée de la partie auto-perceuse et auto-taraudeuse (16, 116) comprenant la tête de perçage (28) et le taraud (26), ladite première partie se terminant par un chanfrein de fin de filet (25) faisant une pente de l'ordre de 30 degrés avec un plan perpendiculaire à l'axe longitudinale (Z-Z') et la seconde partie (11, 111) étant constituée du bouchon (14) et du moyen d'entrainement (12), ledit bouchon comprenant un chanfrein de début de filetage (35) faisant une pente de l'ordre de 30 degrés avec un plan perpendiculaire à l'axe longitudinale (Z-Z'), lesdits deux chanfreins (25) et (35) faisant un angle de l'ordre de 60 degrés entre eux, un rétrécissement annulaire (15) étant situé à la jonction des deux parties de diamètre au plus égal au diamètre de la tête de perçage (28).

3. Dispositif d'obturation (10, 100) selon la revendication 2, comprenant des moyens pour désassembler la première partie (16, 116) de la seconde partie (11, 111).

4. Dispositif d'obturation (10) selon la revendication 3, dans lequel les moyens pour désassembler comprennent un rétrécissement annulaire (15) de diamètre compris entre 75% et 85% du diamètre de la tête de perçage (28), le rétrécissement annulaire (15) constituant alors une amorce de rupture.

5. Dispositif d'obturation (100) selon la revendication 3, dont les parties (111) et (116) sont à l'origine séparées l'une de l'autre, dans lesquels les moyens pour désassembler les parties (116) et (111) sont également des moyens pour les assembler, lesdits moyens comprenant en outre une pièce (153) de section carré située sur la première partie sur la surface de jonction des deux parties et un creux (152) qui s'étend dans l'épaisseur du bouchon (14) à partir du plan de jonction des deux parties, ledit creux ayant une section carrée et une forme correspondant à la forme de la pièce (153), la pièce (153) et le creux (152) ont comme axe de symétrie l'axe longitudinal (Z-Z').

6. Dispositif d'obturation selon la revendication 5, dans lequel lesdits moyens comprennent également une bille (155) située sur une des faces de la pièce (153) et un creux sphérique (154) situé sur une des faces du creux (152) et destiné à loger en partie ladite bille pour bloquer la pièce carrée (153) dans le creux (152) de façon réversible.

7. Dispositif d'obturation selon la revendication 5 ou 6, dans lequel lesdits moyens comprennent également un taraudage (158) situé dans la première partie et un taraudage débouchant (156) situé dans la seconde partie, les deux taraudages étant alignés et centrés sur l'axe longitudinal (Z-Z') ont un diamètre et des filets de caractéristiques identiques, ledit dispositif comprenant également une tige filetée (157) adaptée pour les taraudages (156) et (158) vissée à l'intérieur, ladite tige filetée traverse le moyen d'entrainement 12 et le bouchon 14 jusqu'à la partie auto-perceuse et auto-taraudeuse 16 qu'elle maintient serrée contre le bouchon 14.

8. Dispositif d'obturation selon l'une des revendications 1 à 7, dans lequel la longueur du taraud (26) est au moins égale à l'épaisseur de la paroi (50).

9. Dispositif d'obturation selon l'une des revendications 1 à 8 dans lequel le taraud (26) a un diamètre au fond du filet qui est égal au diamètre de la tête de perçage (28), la hauteur du filet du taraud (26) est comprise entre 10 mm et 20 mm et est de préférence égale à 15 mm, le pas du filet du taraud (26) est compris entre 1 mm et 2 mm et de préférence égal à 1,25 mm.

10. Dispositif selon l'une des revendications 2 à 9, dans lequel le filetage (24) du bouchon (14) a un diamètre nominal égal au diamètre nominal du taraud (26), et un pas de filet égal au pas du filet auto-taraudant (26), le filetage (24) étant une prolongation du taraud (26) de sorte que l'ensemble des deux ne forme qu'une seule hélicoïde interrompue par le rétrécissement annulaire (15).

11. Dispositif d'obturation selon l'une des revendications 1 à 10, le chanfrein de fin de filetage (23) fait un angle compris entre 30 et 50 degrés avec un plan perpendiculaire à l'axe longitudinal (Z-Z') du dispositif d'obturation (10).

12. Dispositif d'obturation selon l'une des revendications 1 à 11, dans lequel la gorge de dégagement (13) comprend une partie cylindrique (22) de longueur (221), le diamètre de la partie cylindrique (22) étant égal au diamètre de fond de filet du filetage (24) du bouchon (14), la longueur (221) de la partie cylindrique (22) est comprise entre 1 et 5 mm.

13. Dispositif d'obturation (10, 100) selon la revendication 12, dans lequel La longueur du bouchon (14) comprenant la longueur du filetage (24), la longueur (221) de la gorge de dégagement (13) et la hauteur des chanfreins (21) et (23) est au moins égale à l'épaisseur de la paroi (50).

14. Dispositif d'obturation (10, 100) selon l'une des revendications précédentes 1 à 13, dans lequel le bouchon (14) comprend une tête de bouchon (141) ayant un diamètre supérieur au diamètre nominal du filetage (24) et un épaulement périphérique (143) sur lequel un joint annulaire (142) est monté, l'épaulement périphérique (143) étant destiné à venir en appui contre la paroi (50) de la canalisation lorsque le dispositif d'obturation (10, 100) est mis en place.

15. Procédé d'obturation d'une fuite (60) sur la paroi (50) d'une canalisation, comprenant les sous-étapes suivantes :
- centrer le dispositif d'obturation (10, 100) selon l'une des revendications 1 à 14 sur l'endroit de la fuite (60),
- entraîner en rotation le dispositif d'obturation (10, 100) autour de son axe longitudinal (Z-Z') grâce à un outil d'entrainement en rotation,
- percer la paroi (50) de la canalisation grâce à une tête de perçage (28) située à l'extrémité du dispositif d'obturation (10, 100) et réaliser un trou cylindrique (52),
- tarauder pour former un taraudage (54) sur la paroi interne lisse dudit trou cylindrique grâce au taraud (26) du dispositif d'obturation (10, 100),
- visser le bouchon (14) situé à l'autre extrémité du dispositif d'obturation (10, 100) dans le trou taraudé jusqu'à ce que le chanfrein supérieur (21) du dispositif d'obturation (10, 100) pénètre entièrement dans le trou cylindrique de façon à exercer une forte pression sur le taraudage (54) et écrouir la fin du filet (51) formant le taraudage.

16. Procédé d'obturation selon la revendication 15, dans lequel avant d'effectuer les sous-étapes, une plaque (40) est fixée sur la paroi (50) à l'endroit de la fuite (60), la forme de ladite plaque étant adaptée à la courbure de ladite paroi, ladite plaque comprenant un orifice (44) pour le passage du dispositif d'obturation (10).

17. Procédé d'obturation selon la revendication 16, dans lequel la plaque (40) est fixée sur la paroi (50) à l'aide de vis (42).

18. Procédé d'obturation selon la revendication 16, dans lequel la plaque (40) est fixée sur la paroi (50) à l'aide d'au moins une sangle (46).

19. Procédé d'obturation selon la revendication 16, dans lequel la plaque (40) est fixée sur la paroi (50) par collage.

## Patentansprüche

1. Abdichtungsvorrichtung (10, 100) mit Längsachse (Z, Z') zum Verstopfen eines Lecks (60) in der Wand (50) einer Rohrleitung oder eines Tanks, umfassend ferner ein Antriebsmittel (12) an einem Ende, einen Stöpsel (14) und einen Gewindebohrer (26), die Vorrichtung umfassend an ihrem anderen Ende einen Bohrkopf (28), der zum Bohren eines zylindrischen Lochs (52) in die Dicke der Wand (50) an dem Ort des Lecks (60) angepasst ist, wobei der Gewindebohrer (26) ein Innengewinde (54) im Inneren der glatten Wände des zylindrischen Lochs (52) schafft,
**dadurch gekennzeichnet, dass** der Stöpsel ein Außengewinde (24) und eine Außengewindeendfase (23) umfasst, an der das Außengewinde (24) endet, wobei sich das Ende des Gewindes auf eine Aussparungsnut (13) und eine glatte obere Fase (21) verlängert, die zum Verformen des Gewindes (51) an dem Ende des Innengewindes (54) angepasst ist, wobei das Loch (52) dazu bestimmt ist, durch den Stöpsel (14) auf dichte Weise zugestöpselt zu werden.

2. Abdichtungsvorrichtung (10, 100) nach Anspruch 1, umfassend zwei Teile, wobei der erste Teil aus dem selbstbohrenden und selbstschneidenden Teil (16, 116) besteht, umfassend den Bohrkopf (28) und den Gewindebohrer (26), wobei der erste Teil in einer Gewindeendefase (25) zu Ende geht, die eine Neigung in der Größenordnung von 30 Grad mit einer Ebene senkrecht zu der Längsachse (Z-Z') bildet, und der zweite Teil (11, 111) aus dem Stöpsel (14) und dem Antriebsmittel (12) besteht, der Stöpsel umfassend eine Außengewindeanfangsfase (35), die eine Neigung in der Größenordnung von 30 Grad mit einer Ebene senkrecht zu der Längsachse (Z-Z') bildet, wobei die zwei Fasen (25) und (35) einen Winkel in der Größenordnung von 60 Grad zwischen sich bilden, wobei sich eine ringförmige Verengung (15) an der Verbindung der zwei Teile befindet, deren Durchmesser höchstens gleich dem Durchmesser des Bohrkopfes (28) ist.

3. Abdichtungsvorrichtung (10, 100) nach Anspruch 2, umfassend Mittel zum Demontieren des ersten Teils (16, 116) von dem zweiten Teil (11, 111).

4. Abdichtungsvorrichtung (10) nach Anspruch 3, wobei die Mittel zum Demontieren eine ringförmige Verengung (15) mit einem Durchmesser zwischen 75 % und 85 % des Durchmessers des Bohrkopfes (28) umfassen, wobei die ringförmige Verengung (15) dann einen Anriss darstellt.

5. Abdichtungsvorrichtung (100) nach Anspruch 3, deren Teile (111) und (116) ursprünglich voneinander getrennt sind, wobei die Mittel zum Demontieren der Teile (116) und (111) auch Mittel zum Montieren sind, die Mittel umfassend ferner ein Stück (153) mit quadratischem Querschnitt, das sich auf dem ersten Teil auf der Verbindungsoberfläche der zwei Teile befindet, und einen Hohlraum (152), der sich von der Verbindungsebene der zwei Teile in die Dicke des Stöpsels (14) erstreckt, wobei der Hohlraum einen quadratischen Querschnitt und eine Form aufweist, die der Form des Stückes (153) entspricht, wobei das Stück (153) und der Hohlraum (152) als Symmetrieachse die Längsachse (Z-Z') aufweisen.

6. Abdichtungsvorrichtung nach Anspruch 5, wobei die Mittel auch eine Kugel (155), die sich auf einer der Seiten des Stückes (153) befindet, und einen kugelförmigen Hohlraum (154) umfassen, der sich auf einer der Seiten des Hohlraums (152) befindet und dazu bestimmt ist, die Kugel zum Blockieren des quadratischen Stückes (153) in dem Hohlraum (152) auf reversible Weise aufzunehmen.

7. Abdichtungsvorrichtung nach Anspruch 5 oder 6, wobei die Mittel auch ein Innengewinde (158), das sich in dem ersten Teil befindet, und ein durchgehendes Innengewinde (156) umfassen, das sich in dem zweiten Teil befindet, wobei die zwei Innengewinde, die auf der Längsachse (Z-Z') ausgerichtet und zentriert sind, einen Durchmesser und Gewinde mit identischen Eigenschaften aufweisen, die Vorrichtung umfassend auch eine Gewindestange (157) die für die Innengewinde (156) und (158) angepasst ist, die im Inneren eingeschraubt ist, wobei die Gewindestange durch das Antriebsmittel 12 und den Stöpsel 14 bis zu dem selbstbohrenden und selbstschneidenden Teil 16 verläuft, den sie an den Stöpsel 14 gepresst hält.

8. Abdichtungsvorrichtung nach einem der Ansprüche 1 bis 7, wobei die Länge des Gewindebohrers (26) mindestens gleich der Dicke der Wand (50) ist.

9. Abdichtungsvorrichtung nach einem der Ansprüche 1 bis 8, wobei der Gewindebohrer (26) an dem Grund des Gewindes einen Durchmesser aufweist, der gleich dem Durchmesser des Bohrkopfes (28) ist, wobei die Höhe des Gewindes des Gewindebohrers (26) zwischen 10 mm und 20 mm liegt und vorzugsweise gleich 15 mm ist, die Steigung des Gewindes des Gewindebohrers (26) zwischen 1 mm und 2 mm liegt und vorzugsweise gleich 1,25 mm ist.

10. Vorrichtung nach einem der Ansprüche 2 bis 9, wobei das Außengewinde (24) des Stöpsels (14) einen Nenndurchmesser, der gleich dem Nenndurchmesser des Gewindebohrers (26) ist, und eine Gewindesteigung aufweist, die gleich der Steigung des selbstschneidenden Gewindes (26) ist, wobei das Außengewinde (24) eine Verlängerung des Gewindebohrers (26) ist, sodass die beiden zusammen nur ein einziges Helikoid ausbilden, das durch die ringförmige Verengung (15) unterbrochen ist.

11. Abdichtungsvorrichtung nach einem der Ansprüche 1 bis 10, wobei die Außengewindeendfase (23) mit einer Ebene senkrecht zu der Längsachse (Z-Z') der Vorrichtungsabdichtung (10) einen Winkel zwischen 30 und 50 Grad bildet.

12. Abdichtungsvorrichtung nach einem der Ansprüche 1 bis 11, wobei die Aussparungsnut (13) einen zylindrischen Teil (22) mit einer Länge (221) umfasst, wobei der Durchmesser des zylindrischen Teils (22) gleich dem Durchmesser des Gewindegrunds des Außengewindes (24) des Stöpsels (14) ist, die Länge (221) des zylindrischen Teils (22) zwischen 1 und 5 mm liegt.

13. Abdichtungsvorrichtung (10, 100) nach Anspruch 12, wobei die Länge des Stöpsels (14), umfassend die Länge des Außengewindes (24), die Länge (221) der Aussparungsnut (13) und die Höhe der Fasen (21) und (23), mindestens gleich der Dicke der Wand (50) ist.

14. Abdichtungsvorrichtung (10, 100) nach einem der vorstehenden Ansprüche 1 bis 13, wobei der Stöpsel (14) einen Stöpselkopf (141) umfasst, der einen Durchmesser größer als der Nenndurchmesser des Außengewindes (24) und eine umlaufende Schulter (143) aufweist, auf der eine ringförmige Dichtung (142) montiert ist, wobei die umlaufende Schulter (143) dazu bestimmt ist, an der Wand (50) der Rohrleitung in Anlage zu kommen, wenn die Abdichtungsvorrichtung (10, 100) angebracht wird.

15. Verfahren zum Abdichten eines Lecks (60) an der Wand (50) einer Rohrleitung, umfassend die folgenden Unterschritte:
- Zentrieren der Abdichtungsvorrichtung (10, 100) nach einem der Ansprüche 1 bis 14 an dem Ort des Lecks (60),
- rotierendes Antreiben der Abdichtungsvorrichtung (10, 100) um ihre Längsachse (Z-Z') dank eines Rotationsantriebswerkzeugs,
- Durchbohren der Wand (50) der Rohrleitung dank einem Bohrkopf (28), der sich an dem Ende der Abdichtungsvorrichtung (10, 100) befindet, und Herstellen eines zylindrischen Lochs (52),
- Bohren eines Gewindes zum Ausbilden eines Innengewindes (54) auf der glatten Innenwand des zylindrischen Lochs dank dem Gewindebohrer (26) der Abdichtungsvorrichtung (10, 100),
- Schrauben des Stöpsels (14), der sich an dem anderen Ende der Abdichtungsvorrichtung (10, 100) befindet, in das Gewindeloch, bis die obere Fase (21) der Abdichtungsvorrichtung (10, 100) vollständig in das zylindrische Loch eindringt, um einen starken Druck auf das Innengewinde (54) auszuüben und das Ende des Gewindes (51) zu verfestigen, das das Innengewinde ausbildet.

16. Abdichtungsverfahren nach Anspruch 15, wobei vor einem Durchführen der Unterschritte eine Platte (40) an der Wand (50) an dem Ort des Lecks (60) befestigt wird, wobei die Form der Platte an die Krümmung der Wand angepasst ist, die Platte umfassend eine Öffnung (44) für den Durchgang der Abdichtungsvorrichtung (10).

17. Abdichtungsverfahren nach Anspruch 16, wobei die Platte (40) mithilfe von Schrauben (42) an der Wand (50) befestigt wird.

18. Abdichtungsverfahren nach Anspruch 16, wobei die Platte (40) mithilfe von mindestens einem Band (46) an der Wand (50) befestigt wird.

19. Abdichtungsverfahren nach Anspruch 16, wobei die Platte (40) durch Kleben an der Wand (50) befestigt wird.

## Claims

1. A sealing device (10, 100) with a longitudinal axis (Z, Z') for plugging a leak (60) in the wall (50) of a pipe or tank further comprising a drive means (12) at one end, a plug (14) and a tap (26), the device comprising at its other end a drilling head (28) adapted to drill a cylindrical hole (52) in the thickness of the wall (50) at the location of the leak (60), said tap (26) creating an internal thread (54) within the smooth walls of the cylindrical hole (52),
**characterized in that** the plug comprises a thread (24) and a thread runout chamfer (23) on which the thread (24) ends, the end of the thread extending over a clearance groove (13) and a smooth upper chamfer (21) suitable for deforming the thread (51) at the end of internal thread (54), said hole (52) being intended to be sealed by the plug (14).

2. The sealing device (10, 100) according to claim 1 comprising two parts, the first part consisting of the self-drilling and self-tapping part (16, 116) comprising the drilling head (28) and the tap (26), said first part ending in a thread runout chamfer (25) forming a slope of about 30 degrees with a plane perpendicular to the longitudinal axis (Z-Z') and the second part (11, 111) consisting of the plug (14) and the drive means (12), said plug comprising a thread start chamfer (35) forming a slope of about 30 degrees with a plane perpendicular to the longitudinal axis (Z-Z'), said two chamfers (25) and (35) forming an angle of about 60 degrees with each other, an annular constriction (15) being located at the junction of the two parts with a diameter at most equal to the diameter of the drilling head (28).

3. The sealing device (10, 100) according to claim 3, comprising means for disassembling the first part (16, 116) from the second part (11, 111).

4. The sealing device (10) according to claim 3, wherein the means for disassembling comprise an annular constriction (15) with a diameter between 75% and 85% of the diameter of the drilling head (28), the annular constriction (15) then constituting an incipient break.

5. The sealing device (100) according to claim 3, the parts (111) and (116) of which are originally separate from each other, wherein the means for disassembling the parts (116) and (111) are also means for assembling them, said means further comprising a part (153) of square cross-section located on the first part on the joining surface of the two parts and a recess (152) which extends into the thickness of the plug (14) from the junction plane of the two parts, said recess having a square cross-section and a shape corresponding to the shape of the part (153), the part (153) and the recess (152) have the longitudinal axis (Z-Z') as axis of symmetry.

6. The sealing device according to claim 5, wherein said means also comprise a ball (155) located on one of the faces of the part (153) and a spherical hollow (154) located on one of the faces of the recess (152) and intended to partially accommodate said ball in order to block the square part (153) in the recess (152) in a reversible manner.

7. The sealing device according to claim 5 or 6, wherein said means also comprises an internal thread (158) located in the first part and a through internal thread (156) located in the second part, the two threads, being aligned and centered on the longitudinal axis (Z-Z'), have a diameter and threads of characteristics identical, said device also comprising a threaded rod (157) adapted for the internal threads (156) and (158) screwed inside, said threaded rod passes through the drive means (12) and the plug (14) up to the self-drilling and self-tapping part (16) which it holds tight against the plug (14).

8. The sealing device according to one of claims 1 to 7, wherein the length of the tap (26) is at least equal to the thickness of the wall (50).

9. The sealing device according to one of claims 1 to 8, wherein the tap (26) has a root diameter which is equal to the diameter of the drilling head (28), the height of the thread of the tap (26) is between 10mm and 20mm and is preferably equal to 15mm, the thread pitch of the tap (26) is between 1 mm and 2mm and preferably equal to 1.25mm.

10. The device according to one of claims 2 to 9, wherein the thread (24) of the plug (14) has a nominal diameter equal to the nominal diameter of the tap (26), and a thread pitch equal to the pitch of the self-tapping thread (26), the thread (24) being an extension of the tap (26) so that the set of the two forms a single helicoid interrupted by the annular constriction (15).

11. The sealing device according to one of claims 1 to 10, wherein the thread runout chamfer (23) forms an angle between 30 and 50 degrees with a plane perpendicular to the longitudinal axis (Z-Z') of the sealing device (10).

12. The sealing device according to one of claims 1 to 11, wherein the clearance groove (13) comprises a cylindrical part (22) with a length (221), the diameter of the cylindrical part (22) being equal to the root diameter of the thread (24) of the plug (14), the length (221) of the cylindrical part (22) is between 1 and 5mm.

13. The sealing device (10, 100) according to claim 12, wherein the length of the plug (14) including the length of the thread (24), the length (221) of the clearance groove (13) and the height of the chamfers (21) and (23) is at least equal to the thickness of the wall (50).

14. The sealing device (10, 100) according to any of preceding claims 1 to 13, wherein the plug (14) comprises a plug head (141) having a diameter greater than the nominal diameter of the thread (24) and a peripheral shoulder (143) on which an annular seal (142) is mounted, the peripheral shoulder (143) being intended to abut against the wall (50) of the pipe when the sealing device (10, 100) is installed.

15. A method for sealing a leak (60) on the wall (50) of a pipe, comprising the following sub-steps:
- centering the sealing device (10, 100) according to any of claims 1 to 14 on the location of the leak (60),
- rotating the sealing device (10, 100) around its longitudinal axis (Z-Z') using a rotation drive tool,
- drilling the wall (50) of the pipe using a drilling head (28) located at the end of the sealing device (10, 100) and making a cylindrical hole (52),
- tapping to form an internal thread (54) on the smooth inner wall of said cylindrical hole using the tap (26) of the sealing device (10, 100),
- screwing the plug (14) located at the other end of the sealing device (10, 100) into the tapped hole until the upper chamfer (21) of the sealing device (10, 100) fully penetrates the cylindrical hole so as to exert strong pressure on the internal thread (54) and work-harden the end of the thread (51) forming the internal thread.

16. A sealing method according to claim 15, wherein before carrying out the sub-steps, a plate (40) is attached to the wall (50) at the location of the leak (60), the shape of said plate being adapted to the curvature of said wall, said plate comprising an orifice (44) provided for the passage of the sealing device (10).

17. A sealing method according to claim 16, wherein the plate (40) is attached to the wall (50) by means of screws (42).

18. A sealing method according to claim 16, wherein the plate (40) is attached to the wall (50) by means of at least one strap (46).

19. A sealing method according to claim 16, wherein the plate (40) is attached to the wall (50) by bonding.
